# EUROPÄISCHE PATENTSCHRIFT

(11) **EP 1 980 798 B1**
(45) Veröffentlichungstag und Bekanntmachung des Hinweises auf die Patenterteilung: **19.01.2011**
(21) Anmeldenummer: 08007118.6
(22) Anmeldetag: 10.04.2008
(51) Int. Cl.: F24F 11/047, F24F 13/14

(54) **Elektronischer Volumenstromregler mit Kraftsensor**
Electronic volume flow regulator with power sensor
Régulateur de volume électronique avec capteur de force

(30) Priorität: 12.04.2007 DE 102007017347; 27.11.2007 DE 102007057060
(43) Veröffentlichungstag der Anmeldung: 15.10.2008
(73) Patentinhaber: Wildeboer, Werner, 26826 Weener (DE)
(72) Erfinder: Wildeboer, Werner, Dipl.-Ing., 26826 Weener (DE); Harms, Thomas, 26605 Aurich (DE)
(74) Vertreter: Wiebusch, Manfred

(56) Entgegenhaltungen:
- EP-A- 1 614 975
- WO-A-2005/053975
- DE-U1-202005 014 277

## Beschreibung

Die Erfindung betrifft einen Volumenstromregler mit einem schwenkbar in einer Strömungsleitung angeordneten Klappenblatt, einem an dem Klappenblatt angeordneten Sensor zur Bestimmung des Volumenstroms durch die Strömungsleitung, einem motorischen Antrieb zur Schwenkverstellung des Klappenblattes, und einer elektronischen Regeleinheit zur Ansteuerung des Antriebs in Abhängigkeit von einem Signal des Sensors.

Volumenstromregler werden beispielsweise in lüftungstechnischen Anlagen dazu eingesetzt, den Volumenstrom der durch eine Strömungsleitung strömenden Luft auf einem annähernd konstanten Wert zu halten.

Es sind mechanisch selbstregeinde Volumenstromregler bekannt, bei denen das Klappenblatt elastisch in die Öffnungsstellung vorgespannt ist. Wenn das schräg in der Strömungsleitung stehende Klappenblatt von der Luft umströmt wird, entsteht aufgrund aerodynamischer Effekte ein Schließmoment, das die Tendenz hat, das Klappenblatt in die Schließstellung zu verschwenken, in der es senkrecht zur Strömungsrichtung steht und die Strömungsleitung im wesentlichen absperrt. Aufgrund der elastischen Vorspannung stellt sich dann bei einer bestimmten Winkelstellung des Klappenblattes und damit bei einem bestimmten Volumenstrom ein Gleichgewicht ein. Die Gleichgewichtsstellung und damit der Sollwert des Volumenstroms ist durch geeignete Dimensionierung der elastischen Rückstellkraft einstellbar.

Mit mechanisch selbstregeinden Volumenstromreglern ist es nicht möglich, die Strömungsleitung dicht abzusperren, weil die Schwenkachse mittig durch das Klappenblatt verläuft und deshalb das Schließmoment bei Erreichen der Schließstellung auf null abnimmt und somit kein ausreichendes Drehmoment zur Verfügung steht, die durch die Dichtung verursachte Reibung zu überwinden und das Klappenblatt vollständig in die Absperrstellung zu bringen.

Elektronische Volumenstromregler der hier betrachteten Art haben den Vorteil, daß sich der Sollwert für den Volumenstrom einfach mit Hilfe eines elektronischen Signals einstellen läßt. Ein weiterer Vorteil besteht darin, daß der Sensor eine Rückmeldung des Istwertes des Volumenstroms erlaubt. Dies erleichtert eine Fernüberwachung und -steuerung des Lüftungssystems. Vorteilhaft ist auch, daß der Volumenstromregler als Absperrelement zum Absperren der Strömungsleitung verwendet werden kann. Dazu wird das Klappenblatt am Rand mit einer umlaufenden Dichtung versehen, die in der Schließstellung an der Wand der Strömungsleitung abdichtet.

Der Volumenstrom wird bei elektronischen Volumenstromreglern zumeist nicht direkt gemessen, sondern indirekt über eine Messung einer zu dem Volumenstrom proportionalen Größe. Zumeist wird an einem Stauelement eine statische, dynamische oder totale Druckdifferenz abgegriffen, die eine möglichst gute Proportionalität zu dem Volumenstrom aufweisen sollte. Bei den meisten herkömmlichen elektronischen Volumenstromreglern sind die Meßelemente für den Abgriff der Druckdifferenz in Abstand stromaufwärts und /oder stromabwärts des Klappenblattes angeordnet, damit die Messung nicht durch Störungen der Luftströmung verfälscht wird, die durch das Klappenblatt verursacht werden.

Allgemein besteht jedoch bei elektronischen Volumenstromreglern das Problem daß sich bei kleinen Volumenströmen nur eine begrenzte Meß- und Regelgenauigkeit erreichen läßt, die bei am Markt erhältlichen Produkten beispielsweise mit ±15% oder ± 20% angegeben wird. Der Grund besteht vor allem darin, daß die bisher verwendeten volumenstromproportionalen Meßsignale eine hohe Spreizung zwischen den maximalen und den minimalen Meßwerten aufweisen. Da der gemessene Druck vom Quadrat der Strömungsgeschwindigkeit abhängig ist, können die höchsten Meßwerte um einen Faktor von 100 bis 140 größer sein als die niedrigsten. Da die Genauigkeit des Meßgerätes auf den maximalen Meßwert bezogen ist, ergibt sich insbesondere bei kleinen Volumenströmen eine hohe prozentuale Meßungenauigkeit. Durch eine notwendige Hysterese bei der Ansteuerung des Stellmotors wird dieses Problem noch verschärft.

Aus DE 20 2005 014 277 U1 ist ein elektronischer Volumenstromregler bekannt, bei dem die Meßelemente für den Abgriff der Druckdifferenz unmittelbar auf dem Klappenblatt angeordnet sind, beispielsweise auf der Anströmseite des Klappenblattes. Die Meßelemente werden durch Öffnungen von zwei Fühlerleitungen gebildet, die durch die Luft unter unterschiedlichen Winkeln angeströmt werden, so daß mit Hilfe eines an die Fühlerleitungen angeschlossenen Druckmessers ein Differenzdruck abgegriffen werden kann. Die Regeleinheit muß in diesem Fall so konfiguriert sein, daß sie den Einfluß der unterschiedlichen Klappenstellungen auf die Druckdifferenz berücksichtig,

Nachteilig ist bei dieser Konstruktion, daß die Fühlerleitungen, die einen gewissen Mindestquerschnitt aufweisen müsse, von dem beweglichen Klappenblatt zu dem stationär angeordneten Druckmesser geführt werden müssen und somit flexibel sein müssen und beim Regelspiel des Klappenblattes wechselnden Biegebeanspruchungen ausgesetzt sind. Außerdem können, da die Druckmessungen punktuell erfolgen, Störungen des Strömungsmusters leicht zu Ungenauigkeiten bei der Erfassung des Volumenstromes führten.

EP 161 4975 zeigt einem weiteren Volumenstromregler gemäß dem Oberbegriff des Patentanspruchs 1.

Aufgabe der Erfindung ist es, einen elektronischen Volumenstromregler zu schaffen, der speziell bei kleinen Volumenströmen eine höhere Regelgenauigkeit aufweist.

Diese Aufgabe wird erfindungsgemäß dadurch gelöst, daß der Sensor ein Kraftsensor ist, der durch einen sich flächig über mindestens einen Teil des Klappenblattes ersteckenden Strömungsfühler betätigt ist.

Meßreihen, bei denen für unterschiedliche Volumenströme die vom Kraftsensor gemessene Kraft in Abhängigkeit von der Winkelstellung des Klappenblattes gemessen wurde, haben gezeigt, daß sich bei dieser Anordnung für die Abhängigkeit der Kraft von der Klappenstellung in einem weiten Bereich von Volumenströmen stetige Kennlinien mit hinreichend kleiner Progression und vor allem mit geringer Spreizung zwischen den maximalen und den minimalen Werten ergeben, so daß über den gesamten Volumenstrombereich hinweg eine hohe Meßgenauigkeit erreicht werden kann. Wenn das Klappenblatt weiter in die Schließstellung verschwenkt wird, um den Volumenstrom zu verringern, so richtet sich der Strömungsfühler, der sich (voll- oder teil-) flächig über das Klappenblatt ersteckt, entsprechend der geänderten Winkelstellung des Klappenblattes steiler in der Strömung auf, so daß er stärker angeströmt wird. Somit liefert der Kraftsensor auch bei kleinen Volumenströmen noch ein deutliches Signal, und folglich wird die Spreizung zwischen den maximalen und minimalen Meßsignalen verringert.

Ein weiterer Vorteil besteht darin, daß durch den ausgedehnten Strömungsfühler die von der Strömung erzeugte Kraft über einen verhältnismäßig großen Strömungsquerschnitt gemittelt wird, wodurch die Messung unempfindlicher gegenüber lokalen Störungen oder kurzperiodischen Fluktuationen der Strömung wird, wie sie beispielsweise in der Anströmung des Reglers bei einem gekrümmten Verlauf der Strömungsleitung oder bei in der Strömungsleitung vorhandenen Hindernissen auftreten können.

Vorteilhafte Ausgestaltungen und Weiterbildungen der Erfindung ergeben sich aus den Unteransprüchen.

Bei dem Strömungsfühler kann es sich um eine beweglich an dem Klappenblatt gelagerte starre Platte handeln, die mit einer von der Jeweiligen Anströmung abhängigen Kraft auf dem Kraftsensor lastet.

In einer anderen Ausführungsform ist der Strömungsfühler eine biegsame Platte oder eine elastische Membran.

Ein zwischen dem Umfangsrand des Strömungsfühlers und dem Klappenblatt gebildeter Spalt kann offen sein oder wahlweise auch mit Hilfe einer nachgiebigen Dichtung abgedichtet werden, um etwaige Strömungsgeräusche zu minimieren, die beim Umströmen des Strömungsfühlers entstehen könnten.

In einer derzeit als bevorzugt angesehenen Ausführungsform ist die Membran in ihrem mittleren Teil durch eine starre Platte verstärkt, und die Platte wirkt auf das freie Ende eines Biegebalkens, der einen als Kraftsensor dienenden Dehnungsmeßstreifen aufweist.

Im folgenden werden Ausführungsbeispiele der Erfindung anhand der Zeichnung näher erläutert.

Es zeigen:
- Fig. 1: einen schematischen axialen Schnitt durch eine Strö- mungsleitung mit einem erfindungsgemäßen Volumen- stromregler in einer Absperrstellung;
- Fig. 2: einen Schnitt längs der Linie II-II in Fig. 1;
- Fig. 3: eine Schnittdarstellung analog zu Fig. 1 für eine geöffnete Stellung des Volumenstromreglers:
- Fig. 4: ein Kraft/Winkel-Diagramm für den Volumenstromregler gemäß Fig. 1 bis 3:
- Fig. 5-8: schematische Schnitte durch Volumenstromregler gemäß modifizierten Ausführungsformen der Erfindung:
- Fig. 9: einen schematischen Schnitt durch einen Strömungsfühler eines Volumenstromreglers gemäß einem weiteren Ausfüh- rungsbeispiel: und
- Fig. 10: ein Kran/Winkel-Diagramm für den Volumenstromregler gemäß Fig. 9.

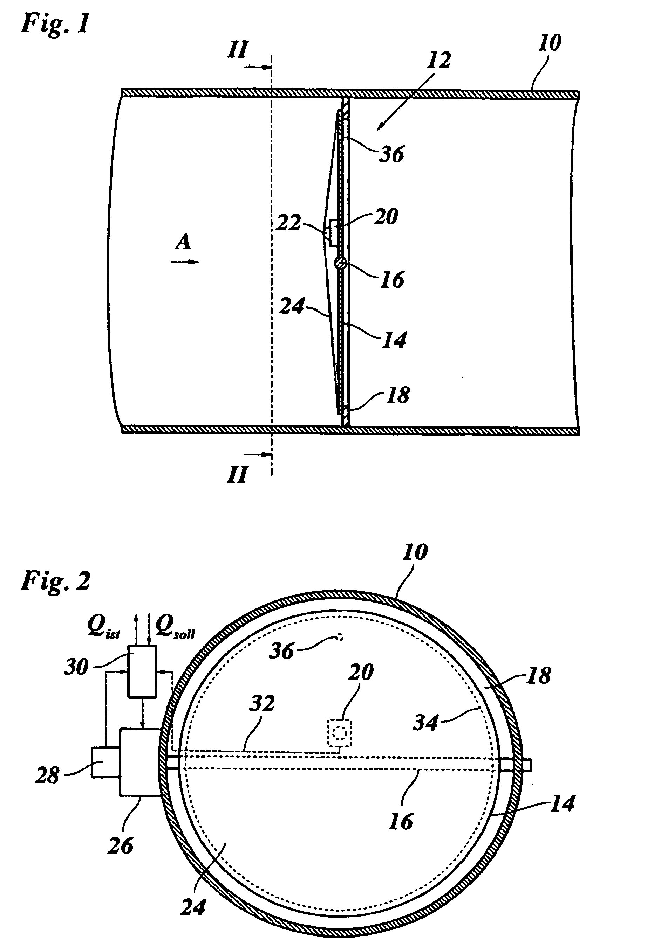

In Fig. 1 ist in einem axialen Schnitt ein Abschnitt einer Strömungsleitung 10 dargestellt, der in der durch einen Pfeil A angegebenen Richtung von einem Medium, insbesondere einem gasförmigen Medium wie beispielsweise Luft durchströmt wird. In der Strömungsleitung 10 ist ein Volumenstromregler 12 angeordnet. Dieser Volumenstromregler weist ein starres, kreisscheibenförmiges Klappenblatt 14 auf, das schwenkbar auf einer längs eines Durchmessers der Kreisscheibe und durch die Mitte der Strömungsleitung 10 verlaufenden Achse 18 angeordnet ist.

Fig. 1 zeigt den Volumenstromregler 12 in einer Sperrstellung, in der das Klappenblatt 14 rechtwinklig zur Strömungsrichtung orientiert ist und die Strömungsleitung 10 vollständig absperrt. Zu diesem Zweck ist am Umfangsrand des Klappenblattes 14 eine umlaufende elastische Dichtung 18 vorgesehen, die an der Innenfläche der Strömungsleitung 10 abdichtet. Das Klappenblatt oder die Dichtung kann in dieser Stellung auch an einem nicht gezeigten Anschlag anliegen.

Auf der der Strömung zugewandten Seite des Klappenblattes 14 ist in der Nähe der Mitte, jedoch etwas gegenüber der Achse 16 versetzt, ein Kraftsensor 20 montiert, der einen vorspringenden Kraftaufnehmer 22 aufweist. Ein Strömungsfühler 24 wird durch eine elastische Membran gebildet, die an ihrem Umfangsrand mit dem Rand des Klappenblattes 14 verklebt ist und sich über den vorspringenden Kraftaufnehmer 22 des Kraftsensors 20 spannt.

Der Kraftsensor 20 ist von bekannter Bauart. Wenn auf den Kraftaufnehmer 22 eine Kraft wirkt, so bewegt sich dieser Kraftaufnehmer entgegen einer elastischen Rückstellkraft sehr geringfügig relativ zu dem Gehäuse des Kraftsensors, und diese Relativbewegung wird in ein zu der Kraft proportionales elektronisches Signal umgewandelt. Da die Membran, die den Strömungsfühler 24 bildet, elastisch gespannt ist, wirkt über den Kraftaufnehmer 22 auf den Kraftsensor 20 auch im Nullzustand, wenn keine Strömung auf die Membran einwirkt, eine gewisse Kraft, die beispielsweise in der Größenordnung von 5 N liegen kann. Wenn durch die Strömung, die gegen den Strömungsfühler 24 anströmt und diesen (in geöffneter Stellung) umströmt, ein statischer und/oder dynamischer Druck auf die Membran ausgeübt wird, so mißt der Kraftsensor 20 eine entsprechend erhöhte Kraft.

In Fig. 2 sind der kreisförmige Querschnitt der Strömungsleitung 10 und der kreisförmige Grundriß des Klappenblattes 14 zu erkennen. Die Achse 16 ist drehbar durch die Wand der Strömungsleitung 10 hindurchgeführt und an einem Ende mit einem außen an der Strömungsleitung angebrachten Antrieb verbunden, der hier durch einen elektrischen Stellmotor 26 gebildet wird. Dem Stellmotor 26 ist ein Winkelgeber 28 zugeordnet, mit dem die Winkelstellung des Klappenblattes gemessen wird. Ein entsprechendes Winkelsignal wird an eine elektronische Regeleinheit 30 übermittelt, die den Stellmotor 26 ansteuert.

Der Kraftsensor 20 ist in Fig. 2 durch den membranförmigen Strömungsfühler 24 verdeckt und deshalb nur gestrichelt dargestellt. Das von dem Kraftsensor erzeugte Kraftsignal wird über eine Leitung 32, die an der Achse 16 entlang oder durch diese Achse hindurchgeführt ist, an die Regeleinheit 30 übermittelt.

In der Regeleinheit 30 ist ein Regelalgorithmus gespeichert, der auf einer mathematischen Formel oder einer Tabelle basiert, die eine vorab empirisch ermittelte Beziehung zwischen dem Volumenstrom Q durch die Strömungsleitung 10 (bei nicht ganz geschlossenem Klappenblatt), der Winkelstellung a des Klappenblattes, und der vom Kraftsensor 20 gemessenen Kraft F repräsentiert. Anhand dieser Beziehung berechnet die Regeleinheit 30 dann einen Istwert Qᵢₛₜ für den Volumenstrom Q. vergleicht diesen mit einem an der Regeleinheit einstellbaren Sollwert Qₛₒₗₗ und steuert den Stellmotor 26 (vorzugsweise mit einer gewissen Hysterese) so an, daß der Volumenstrom auf den Sollwert eingeregelt wird. Der Istwert kann an eine zentrale Steuereinheit gemeldet werden, von der auch der Sollwert empfangen wird.

In Fig. 2 ist außerdem am Umfangsrand des Klappenblattes 14 und des Strömungsfühlers 24 ein Kleberand 34 dargestellt, durch den die Membran des Strömungsfühlers ringsum dicht mit dem Klappenblatt verbunden ist. Das Klappenblatt weist mindestens ein kleines Loch 36 auf, das für einen Druckausgleich zwischen dem zwischen dem Strömungsfühler und dem Klappenblatt eingeschlossenen Volumen und der Umgebung sorgt. Das Loch 36 kann so dimensioniert sein oder mit einem porösen Material gefüllt sein, daß etwaige Schwingungen der Membran gedämpft werden. So läßt sich vermeiden, daß der Strömungsfühler durch das umströmende Medium zum Flattern angeregt wird.

Da alle Komponenten des Sensors, also der Kraftsensor 20 und der Strömungsfühler 24, auf einer Seite des Klappenblattes 14 angeordnet sind, läßt sich die Dichtung 18 so an dem Klappenblatt anbringen, daß sie in der in Fig. 1 und 2 gezeigten geschlossenen Stellung ringsum an der Innenwand der Strömungsleitung 10 abdichtet. Die Dichtung 18 wird dabei geringfügig komprimiert bzw. angepreßt, so daß eine hohe Dichtheit und eine gewisse Druckfestigkeit erreicht wird. Die zwischen der Dichtung 18 und der Wand der Strömungsleitung 10 auftretenden Reibungskräfte können durch den Stellmotor 26 überwunden werden, wenn das Klappenblatt 14 aus der geschlossenen Stellung in eine geöffnete Stellung überführt werden soll.

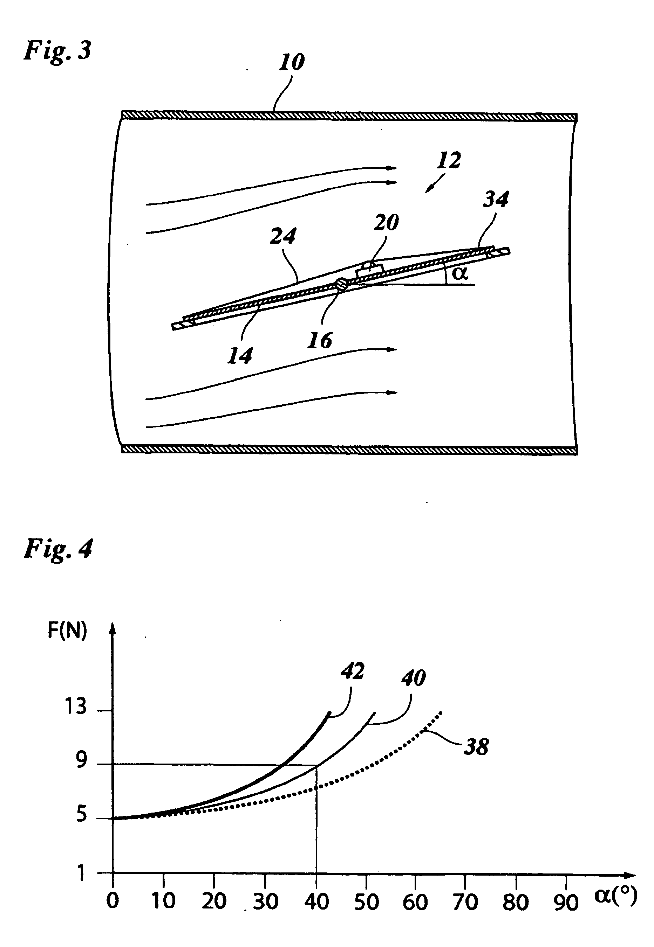

In Fig. 3 ist der Volumenstromregler 12 in einer relativ weit geöffneten Stellung gezeigt. Hier ist auch der Winkel α eingezeichnet, den das Klappenblatt 14 mit der Längsachse der Strömungsleitung 10 bildet.

Durch Pfeile ist in Fig. 3 illustriert, wie die durch die Strömungsleitung 10 strömende Luft das Klappenblatt 14 umströmt. Aufgrund der Schrägstellung des Klappenblattes wird der Strömungsfühler 24 so angeströmt, daß er eine erhöhte Kraft auf den Kraftsensor 20 ausübt. Dieser Effekt wird im gezeigten Beispiel noch dadurch verstärkt, daß der Kraftsensor 20 etwas in stromabwärtiger Richtung versetzt zu der Achse 16 angeordnet ist, so daß die Fläche des Teils des Strömungsfühlers 24 vergrößert ist, der steiler in der Strömung steht. Je kleiner der Winkel α ist, desto flacher wird der Strömungsfühler 24 angeströmt, und dies führt in der Tendenz zu einer Abnahme der auf den Kraftsensor 20 wirkenden Kraft. Dieser Effekt wird jedoch teilweise dadurch kompensiert, daß bei kleinerem Winkel α der Luftströmung ein kleinerer Widerstand entgegengesetzt wird und sich somit bei gegebenem Leitungsdruck der Volumenstrom und damit auch die Strömungsgeschwindigkeit der Luft erhöht.

Bei sehr kleinem Winkel α kann es aufgrund eines "Tragflächeneffekts" auch vorkommen, daß die Membran des Strömungsfühlers vom Klappenblatt abgehoben wird und somit die vom Kraftsensor gemessene Kraft kleiner wird als der Ruhewert. Da dieser Ruhewert jedoch aufgrund der elastischen Vorspannung der Membran größer ist als null, kann auch in diesem Fall die Kraft präzise gemessen werden.

Da der Strömungsfühler 24 auf seinem gesamten Umfang durch den Kleberand 34 dicht mit dem Klappenblatt 14 verbunden ist, dringt die Luftströmung nicht in den Zwischenraum zwischen der Membran und dem Klappenblatt ein. Dies vermeidet die Hinterstömung einzelner Elemente und trägt zur Geräuscharmut des Volumenstromreglers bei.

Da die Membran, die den Strömungsfühler 24 bildet, sehr dünn und folglich sehr leicht sein kann, ist die im Prinzip von der Winkelstellung des Klappenblattes abhängige Kraft, die durch das Eigengewicht der Membran verursacht wird, bei der Messung vernachlässigbar. Damit ist der Regler in seiner Funktion unabhängig von seiner Einbaulage.

In Fig. 4 ist für den in Fig. 1 bis 3 gezeigten Volumenstromregler für drei verschiedene Volumenströme jeweils die vom Kraftsensor 20 gemessene Kraft gegen den Winkel α des Klappenblattes aufgetragen. Die Messungen wurden für einen Volumenstromregler für Strömungsleitungen 10 mit der Nennweite DN200 (200 mm Durchmesser) ausgeführt. Die Kurve 38 in Fig. 4 entspricht einem Volumenstrom von 365 m³/h, die Kurve 40 einem Volumenstrom von 675 m³/h und die Kurve 42 einem Volumenstrom von 1054 m³/h. Entsprechend läßt sich im Prinzip für jeden Volumenstrom eine Kennlinie aufnehmen, so daß man eine Schar von Kennlinien erhält, die jeweils die Beziehung zwischen Kraft und Klappenwinkel angibt.

Für jedes Paar aus Klappenwinkel und gemessener Kraft gibt es genau eine Kurve, die durch den betreffenden Punkt in dem Diagramm nach Fig. 4 hindurchgeht. Wenn beispielsweise bei einem Winkel α von 40° vom Kraftsensor 20 eine Kraft von 9 N gemessen wird, so ist der zugehörige Volumenstrom durch die Kurve 40 gegeben, d.h., er beträgt 675 m³/h. Auf diese Weise läßt sich in der Regeleinheit 30 für jedes Meßwertepaar ein Istwert für den Volumenstrom messen, der dann für die Berechnung des Steuersignals für den Stellmotor 26 zugrundegelegt wird und wahlweise auch an eine externe Überwachungseinrichtung gemeldet werden kann.

Man erkennt in Fig. 4, daß die Kennlinien für die verschiedenen Volumenströme einen stetigen und differenzierbaren Verlauf mit geringer Progression haben und sich durch Polynome niedrigen Grades, beispielsweise zweiten Grades approximieren lassen. Da sich die Kennlinien für die verschiedenen Volumenströme nirgends überschneiden (außer bei dem Klappenwinkel 0°). läßt sich jedem Meßwertepaar eindeutig ein Volumenstrom zuordnen.

Außerdem ist in Fig. 4 zu erkennen, daß die vom Kraftsensor 20 gemessenen Werte für die Klappenwinkel, die bei dem jeweiligen Volumenstrom realistisch sind, nur zwischen etwa 5 N und 13 N variierten, d.h., die Spreizung zwischen den Meßwerten entspricht für den gesamten Volumenstrom-Einsatzbereich nur einem Faktor von etwa 2 - 3. Das bedeutet, daß auch bei kleinen Volumenströmen ein Kraftniveau erreicht wird, bei dem auch mit einem Kraftsensor 20, der eine übliche Meßgenauigkeit aufweist, eine relativ genaue Bestimmung des Volumenstroms möglich ist.

Der kleinste Wert F = 5 N wird in Fig. 4 bei einem Klappenwinkel a = 0° erreicht, d.h., wenn die Luftströmung parallel an dem Strömungsfühler 24 entlangströmt und praktisch keine Kraft auf diesen ausübt, so daß der Kraftsensor 20 nur die elastische Spannung der Membran mißt.

Würde man in Fig. 4 den Volumenstrom auf einer dritten (senkrecht zur Zeichenebene verlaufenden) Achse auftragen, so würde die Beziehung zwischen dem Volumenstrom Q und den Größen a und F durch eine gekrümmte Fläche im dreidimensionalem Raum repräsentiert, und die Kurven 38. 40, 42 wären "Höhenlinien" dieser Fläche. Diese Beziehung kann in der Regeleinheit 30 mit der gewünschten Genauigkeit durch ein dreidimensionales Kennfeld abgebildet werden. Ebenso ist es auch möglich, die genannte Fläche, die den Volumenstrom Q als Funktion der Variablen a und F angibt, durch ein Polynom niederer Ordnung zu approximieren, so daß sich der Volumenstrom einfach durch Einsetzen der jeweiligen Meßwerte in dieses Polynom berechnen läßt.

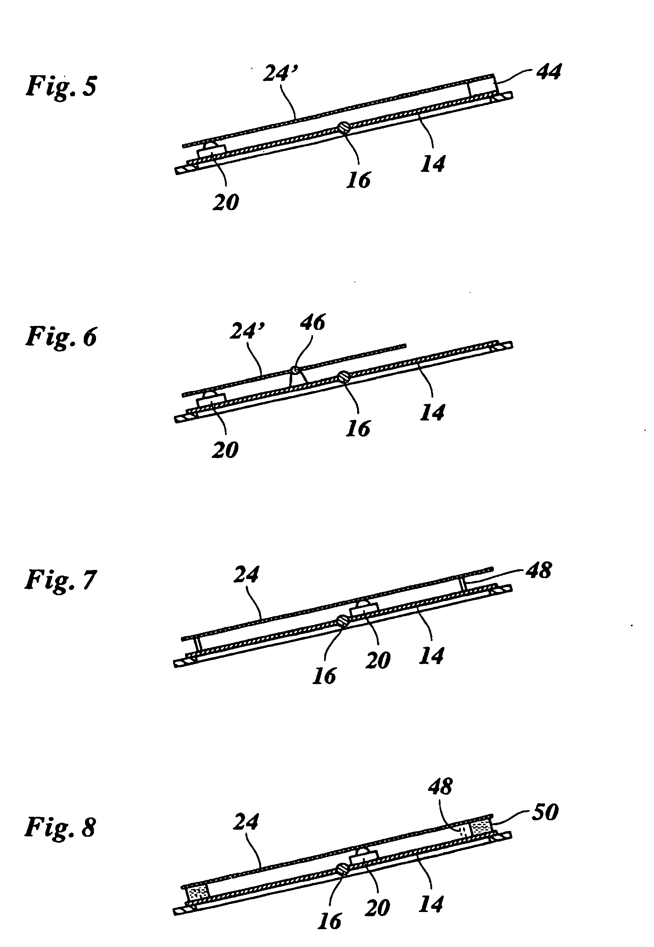

Fig. 5 bis 8 illustrieren abgewandelte Ausführungsformen des Volumenstromreglers 12.

In Fig. 5 ist der Strömungsfühler eine starre Platte 24', die an einem Punkt ihres Randes, im gezeigten Beispiel am stromabwärtigen bzw. oberen Ende des Klappenblattes 14, durch einen elastischen Block 44 am Klappenblatt 14 befestigt und parallel in Abstand zu diesem gehalten ist. Der Kraftsensor 20 liegt dem Block 44 diametral gegenüber, so daß die von der Strömung hervorgerufene Kraft über einen großen Hebelarm auf den Kraftsensor wirkt. Am Umfang der Platte 24' ist in diesem Beispiel der zwischen dieser Platte und dem Klappenblatt 14 gebildete Spalt offen, so daß eine freie Schwenkbeweglichkeit des Strömungsfühlers um die durch den Block 44 gebildete Achse gegeben ist.

In Fig. 6 wird der Strömungsfühler ebenfalls durch eine starre Platte 24' gebildet, deren Abmessungen jedoch etwas kleiner sind als die des Klappenblattes 14. Die Platte 24' ist hier schwenkbar auf einer Achse 46 gelagert, die durch Lagerböcke auf dem Klappenblatt 14 gehalten ist. Der Kraftsensor 20 befindet sich wieder am stromaufwärtigen bzw. unteren Ende des Klappenblattes.

In diesem Beispiel verläuft die Achse 46 durch die Mitte der Platte 24'. Die Strömungs- und Volumenstromabhängigkeit der Kraft resultiert in diesem Fall daraus, daß die Luftströmung bei schrägstehendem Klappenblatt durch den Strömungsfühler umgelenkt wird und somit ein Druckprofil entsteht. Im unteren, näher am dem Kraftsensor 20 gelegenen Teil des Strömungsfühlers entsteht ein größerer Druck als in dem jenseits der Achse 46 gelegenen Bereich. Wahlweise kann jedoch die Achse 46 auch außermittig zu der Platte 24' verlaufen und beispielsweise einen größeren Abstand zu dem Kraftsensor 20 aufweisen.

In Fig. 7 ist der Strömungsfühler 24 wieder als Membran oder flexible Platte ausgebildet, die jedoch nicht direkt mit dem Rand des Klappenblattes 14 verbunden ist, sondern punktuell, durch (beispielsweise drei) auf dem Umfang verteilte starre Stützen 48 in einen solchen Abstand zu dem Klappenblatt 14 gehalten wird, daß sie in ihrem mittleren Teil den Kraftsensor 20 gerade eben berührt. Der Kraftsensor 20 ist ähnlich wie in Fig. 1 geringfügig versetzt zur Achse 16 etwa in der Mitte des Klappenblattes 14 angeordnet. Die anströmende Luft bewirkt hier eine Durchbiegung des Strömungsfühlers 24 und damit eine Betätigung des Kraftsensors.

Die Ausführungsform nach Fig. 8 unterscheidet sich von dem Beispiel gemäß Fig. 7 nur dadurch, daß der zwischen dem Strömungsfühler 24 und dem Klappenblatt 14 gebildete Spalt am Umfang durch einen flexiblen Balg oder einen Ring 50 aus sehr nachgiebigem Material abgeschlossen ist, damit eine Hinterströmung des Strömungsfühlers 24 und die damit verbundene Geräuschbildung vermieden wird. Dies ist analog auch bei den Ausführungsformen nach Fig. 5 und 6 möglich.

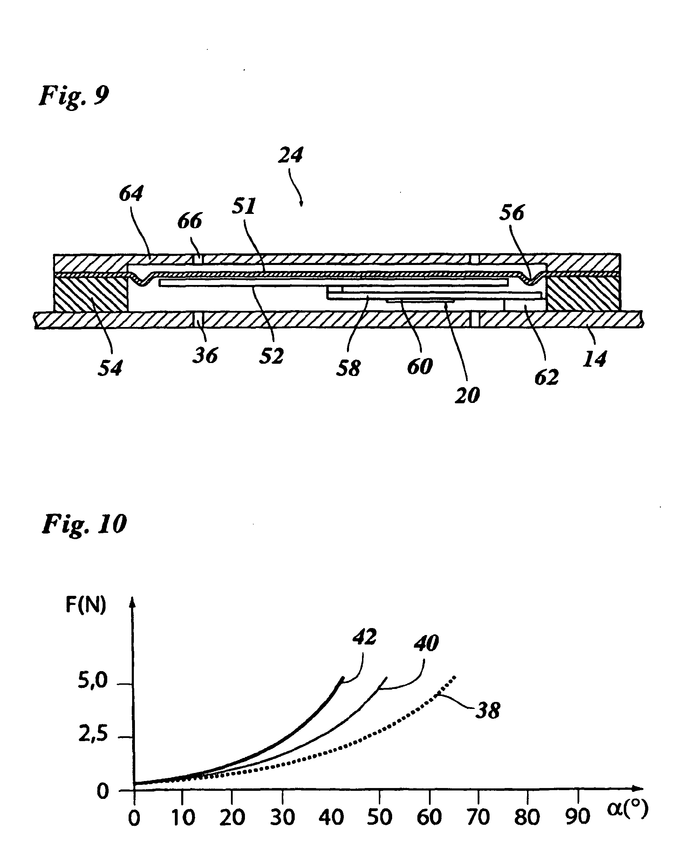

Bei dem in Fig. 9 gezeigten Beispiel weist der Strömungsfühler 24 eine flexible Membran 51 auf, die mit ihrem zentralen Bereich lose auf einer starren Lastplatte 52 aufliegt, während ihr äußerer Rand fest auf einem Tragring 54 gehalten ist, der seinerseits auf dem Klappenblatt 14 befestigt ist. In einem ringförmigen Bereich zwischen der Lastplatte 52 und dem Tragring 54 bleibt die Membran 51 beweglich. Diese Beweglichkeit wird im gezeigten Beispiel durch eine in der Membran gebildete Sicke 56 erreicht, kann jedoch wahlweise auch dadurch erreicht werden, daß die Membran in diesem Bereich aus einem elastischen Material besteht oder einen Faltenbalg bildet oder mit Übermaß gefertigt und dann radial komprimiert eingebaut wird.

Der Kraftsensor 20 wird bei dieser Ausführungsform durch einen Biegebalken 58 und einen darunter befestigten Dehnungsmeßstreifen 60 gebildet. Der Biegebalken 58 ist mit einem Ende an einem Absatz 62 des Tragrings 54 befestigt und erstreckt sich von dort aus frei auskragend bis unter die Mitte der Tragplatte 52. Diese Tragplatte 52 ist im Bereich ihres Mittelpunkts fest mit dem freien Ende des Biegebalkens 58 verbunden und wird so im unbelasteten Zustand in der in Fig. 9 gezeigten Position gehalten, in der sie sich parallel zum Klappenblatt 14 erstreckt und den Mittelteil der flexiblen Membran 51 abstützt.

Die Membran und der Kraftsensor 20 sind durch eine flache Schutzhaube 64 abgedeckt und geschütz. Diese Schutzhaube stützt sich mit ihrem äußeren Umfangsrand auf dem äußeren Rand der Membran 51 ab, der seinerseits auf dem Tragring 54 gehalten ist. Beispielsweise können bei der Montage der Tragring 54 und die Schutzhaube 64 einfach mit dem Klappenblatt 14 verschraubt werden, so daß der Rand der Membran zwischen dem Tragring und der Schutzhaube fest eingespannt wird.

Ebenso wie das Klappenblatt 14 weist auch die Schutzhaube 64 Löcher 66 auf, so daß die anströmende Luft bzw. der dadurch erzeugte Druck auf die Membran wirken kann. Die Löcher 36 im Klappenblatt 14 sorgen dafür, daß auf der anderen Seite der Membran, also in dem Raum innerhalb des Tragrings 54, der gleiche Druck herrscht wie auf der Abströmseite des Klappenblattes. Bei Anströmung des Strömungsfühlers entsteht so eine Druckdifferenz, die bewirkt, daß der zentrale, infolge der Sicke 56 bewegliche Teil der Membran 51 auf die Lastplatte 52 drückt und somit eine Biegekraft auf das freie Ende des Biegebalkens 58 ausübt. Die entsprechende Durchbiegung wird mit Hilfe des Dehnungsmeßstreifens 60 gemessen und in ein elektrisches Signal umgewandelt, das ähnlich wie in Fig. 2 an die Regeleinheit 30 übermittelt wird.

Der Biegebalken 58 und der Dehnungsmeßstreifen 60 bestehen vorzugsweise aus Metallen mit annähernd gleichen Wärmeausdehnungskoeffizienten, so daß der Kraftfühler 20 temperaturkompensiert ist.

In einer modifizierten Ausführungsform kann die Lastplatte 52 auch fest an dem mittleren Teil der Membran 51 angebracht sein oder selbst diesen mittleren Teil der Membran bilden und sich über einen Dorn oder dergleichen lose auf dem freien Ende des Biegebalkens 58 abstützen.

Da die Membran und die Lastplatte 52 in diesem Beispiel ein vernachlässigbar kleines Gewicht haben, mißt der Kraftsensor 20 im strömungsfreien Zustand nahezu die Kraft null wie in dem Diagramm in Fig. 10 dargestellt ist (für einen effektiven Membrandurchmesser von ca. 70 mm). In diesem Diagramm haben die Kurven 38, 40 und 42 sinngemäß die gleiche Bedeutung wie in Fig. 4.

Im gezeigten Beispiel bilden der Tragring 54 und die Schutzhaube 64 zusammen mit dem Kraftsensor 20 und der Membran 51 eine stabile Meßzelle, die sich einfach an dem Klappenblatt 14 montieren läßt, unabhängig von der jeweiligen Größe des Klappenblattes. Bei einem Volumenstromregler mit minimaler Nennweite wird diese Meßzelle nahezu die gesamte Grundfläche des Klappenblattes einnehmen. Bei größeren Nennweiten kann dieselbe Meßzelle verwendet werden, die dann allerdings einen entsprechend kleineren Teil der Fläche des Klappenblattes einnimmt. Da für alle Reglergrößen die Druckbelastung gleich ist und die Strömungsgeschwindigkeiten (Volumenstrom pro Fläche) sehr ähnlich sind, liefert der Kraftsensor 20 für die verschiedenen Reglergrößen ähnliche Signale.

## Patentansprüche

1. Volumenstromregler mit einem schwenkbar in einer Strömungsleitung (10) angeordneten Klappenblatt (14), einem an dem Klappenblatt angeordneten Sensor zur Bestimmung des Volumenstroms durch die Strömungsleitung, einem motorischen Antrieb (26) zur Schwenkverstellung des Klappenblattes (14), und einer elektronischen Regeleinheit (30) zur Ansteuerung des Antriebs (26) in Abhängigkeit von einem Signal des Sensors, **dadurch gekennzeichnet, daß** der Sensor ein Kraftsensor (20) ist, der durch einen sich flächig über mindestens einen Teil des Klappenblattes (14) erstreckenden Strömungsfühler (24; 24') betätigt ist.

2. Volumenstromregler nach Anspruch 1, **dadurch gekennzeichnet, daß** der Strömungsfühler (24) eine flexible Platte oder Membran ist.

3. Volumenstromregler nach Anspruch 2, **dadurch gekennzeichnet, daß** der Strömungsfühler (24) im Bereich seines Umfangsrandes durch Stützen (48) auf Abstand zu dem Klappenblatt (14) gehalten ist.

4. Volumenstromregler nach einem der vorstehenden Ansprüche, **dadurch gekennzeichnet, daß** der Strömungsfühler eine beweglich an dem Klappenblatt (14) gehaltene starre Platte (24'; 52) aufweist.

5. Volumenstromregler nach einem der vorstehenden Ansprüche, **dadurch gekennzeichnet, daß** der Kraftsensor (20) einen mit einem Dehnungsmeßstreifen (60) versehenen Biegebalken (58) aufweist.

6. Volumenstromregler nach den Ansprüchen 4 und 5, **dadurch gekennzeichnet, daß** sich die starre Platte (52) auf dem freien Ende des Biegebalkens (58) abstützt.

7. Volumenstromregler nach einem der vorstehenden Ansprüche, **dadurch gekennzeichnet, daß** der Strömungsfühler eine Membran (51) aufweist, die sich mit ihrem äußeren Umfangsrand über einen Tragring (54) auf dem Klappenblatt (14) abstützt und innerhalb des Tragrings einen flexiblen Bereich (56) aufweist.

8. Volumenstromregler nach den Ansprüchen 6 und 7, **dadurch gekennzeichnet, daß** der zentrale Bereich der Membran (51) des Strömungsfiihlers (24) sich lose auf der starren Platte (52) abstützt, die am freien Ende des Biegebalkens (58) befestigt ist.

9. Volumenstromregler nach den Ansprüchen 6 und 7, **dadurch gekennzeichnet, daß** die starre Platte (52) am mittleren Teil der Membran (51) befestigt ist und sich lose auf dem freien Ende des Biegebalkens (58) abstützt.

10. Volumenstromregler nach einem der vorstehenden Ansprüche, **dadurch gekennzeichnet, daß** der Strömungsfühler (24) auf seinem gesamten Umfangsrand fest und dicht mit dem Klappenblatt (14) verbunden ist.

11. Volumenstromregler nach Anspruch 10, **dadurch gekennzeichnet, daß** der Zwischenraum zwischen dem Strömungsfühler (24) und dem Klappenblatt (14) belüftet ist.

12. Volumenstromregler nach einem der vorstehenden Ansprüche, **dadurch gekennzeichnet, daß** der Strömungsfühler durch eine mit Löchern (66) versehene Schutzhaube (64) abgedeckt ist.

13. Volumenstromregler nach einem der vorstehenden Ansprüche, **dadurch gekennzeichnet, daß** ein Winkelgeber (28) zur Messung des Winkels (α) des Klappenblattes (14) vorgesehen ist und daß die Regeleinheit (30) dazu ausgebildet ist, den Volumenstrom in Abhängigkeit von der Winkelstellung (α) des Klappenblattes und der vom Kraftsensor (20) gemessenen Kraft zu bestimmen.

## Claims

1. Volume flow regulator comprising a flap (14) that is pivotably arranged in a flow path (10), a sensor provided on the flap for determining the volume flow through the flow path, a motor drive unit (26) for pivotally adjusting the flap (14), and an electronic controller (30) for controlling the drive unit (26) in a response to a signal from the sensor, **characterized in that** the sensor is a force sensor (20) that is actuated by a flow detector (24; 24') that extends two-dimensionally over at least a part of the flap (14).

2. Volume flow regulator according to claim 1, **characterized in that** the flow detector (24) is a flexible plate or membrane.

3. Volume flow regulator according to claim 2, **characterized in that** the flow detector (24) has its peripheral edge held spaced apart from the flap (14) by supports (48).

4. Volume flow regulator according to any of the preceding claims, **characterized in that** the flow detector comprises a rigid plate (24'; 52) that is movably held on the flap (14).

5. Volume flow regulator according to any of the preceding claims, **characterized in that** the force sensor (20) comprises a bending beam (58) equipped with a resistance strain gauge (60).

6. Volume flow regulator according to claims 4 and 5, **characterized in that** the rigid plate (52) is supported on the distal end of the bending beam (58).

7. Volume flow regulator according to any of the preceding claims, **characterized in that** the flow detector comprises a membrane (51) which is supported with its outer peripheral edge on the flap (14) via a support ring (54) and has a flexible portion (56) inside of the support ring.

8. Volume flow regulator according to claims 6 and 7, **characterized in that** the central portion of the membrane (51) of the flow detector (24) is loosely supported on the rigid plate (52) that is mounted to the distal end of the bending beam (58).

9. Volume flow regulator according to claims 6 and 7, **characterized in that** the rigid plate (52) is secured to the central portion of the membrane (51) and is loosely supported on the distal end of the bending beam (58).

10. Volume flow regulator according to any of the preceding claims, **characterized in that** the flow detector (24) is fixedly and tightly connected to the flap (14) on its entire peripheral edge.

11. Volume flow regulator according to claim 10, **characterized in that** the clearance between the flow detector (24) and the flap (14) is vented.

12. Volume flow regulator according to any of the preceding claims, **characterized in that** the flow detector is covered by a protective cap (64) that is perforated by holes (66).

13. Volume flow regulator according to any of the preceding claims, **characterized in that** an angular increment detector (28) is provided for measuring the angle (α) of the flap (14), and the controller (30) is adapted to determine the volume flow on the basis of the angular position (α) of the flap and the force measured by the force sensor (20).

## Revendications

1. Régulateur de débit volumétrique comportant une lame de clapet (14) agencée de manière pivotante dans une conduite d'écoulement (10), un capteur agencé sur la lame de clapet pour déterminer le débit volumétrique à travers la conduite d'écoulement, un entraînement motorisé (26) pour régler le pivotement de la lame de clapet (14), et une unité de régulation électronique (30) pour commander l'entraînement (26) en fonction d'un signal du capteur, **caractérisé en ce que** le capteur est un capteur de force (20) qui est actionné par un capteur d'écoulement (24 ; 24') s'étendant à plat sur au moins une partie de la lame de clapet (14).

2. Régulateur de débit volumétrique selon la revendication 1, **caractérisé en ce que** le capteur d'écoulement (24) est une plaque ou une membrane souple.

3. Régulateur de débit volumétrique selon la revendication 2, **caractérisé en ce que** dans la zone de son bord périphérique, le capteur d'écoulement (24) est maintenu à distance de la lame de clapet (14) par des supports (48).

4. Régulateur de débit volumétrique selon l'une quelconque des revendications précédentes, **caractérisé en ce que** le capteur d'écoulement comporte une plaque rigide (24' ; 52) maintenue de manière mobile sur la lame de clapet (14).

5. Régulateur de débit volumétrique selon l'une quelconque des revendications précédentes, **caractérisé en ce que** le capteur de force (20) comporte une poutre de flexion (58) munie d'une jauge d'extensométrie (60).

6. Régulateur de débit volumétrique selon les revendications 4 et 5, **caractérisé en ce que** la plaque rigide (52) est en appui sur l'extrémité libre de la poutre de flexion (58).

7. Régulateur de débit volumétrique selon l'une quelconque des revendications précédentes, **caractérisé en ce que** le capteur d'écoulement comporte une membrane (51) qui, avec son bord périphérique extérieur, est en appui sur la lame de clapet (54) au-dessus d'une bague de support (54) et comporte une zone souple (56) à l'intérieur de la bague de support.

8. Régulateur de débit volumétrique selon les revendications 6 et 7, **caractérisé en ce que** la zone centrale de la membrane (51) du capteur d'écoulement (24) est en appui de manière lâche sur la plaque rigide (52) qui est fixée à l'extrémité libre de la poutre de flexion (58).

9. Régulateur de débit volumétrique selon les revendications 6 et 7, **caractérisé en ce que** la plaque rigide (52) est fixée à la partie centrale de la membrane (51) et est en appui de manière lâche sur l'extrémité libre de la poutre de flexion (58).

10. Régulateur de débit volumétrique selon l'une quelconque des revendications précédentes, **caractérisé en ce que** le capteur d'écoulement (24) est relié à la lame de clapet (14) de manière fixe et étanche au niveau de son bord périphérique complet.

11. Régulateur de débit volumétrique selon la revendication 10, **caractérisé en ce que** l'espace intermédiaire entre le capteur d'écoulement (24) et la lame de clapet (14) est ventilé.

12. Régulateur de débit volumétrique selon l'une quelconque des revendications précédentes, **caractérisé en ce que** le capteur d'écoulement est recouvert d'un couvercle de protection (64) muni de trous (66).

13. Régulateur de débit volumétrique selon l'une quelconque des revendications précédentes, **caractérisé en ce qu'**un capteur angulaire (28) est prévu pour mesurer l'angle (α) de la lame de clapet (14), et **en ce que** l'unité de régulation (30) est conçue pour déterminer le débit volumétrique en fonction du réglage angulaire (α) de la lame de clapet et de la force mesurée par le capteur de force (20).
